# EUROPÄISCHE PATENTSCHRIFT

(11) **EP 1 448 409 B1**
(45) Veröffentlichungstag und Bekanntmachung des Hinweises auf die Patenterteilung: **16.03.2016**
(21) Anmeldenummer: 01988059.0
(22) Anmeldetag: 21.12.2001
(51) Int. Cl.: B60R 13/02, B60K 37/02, B60Q 1/00

(54) **FLÄCHIGER ABSCHNITT EINER VERKLEIDUNG IM INNENRAUM EINES FAHRZEUGS**
FLAT PANELING SECTION IN THE INTERIOR OF A VEHICLE
PARTIE PLANE D'UN HABILLAGE DANS L'HABITACLE D'UN VEHICULE

(30) Priorität: 28.11.2001 DE 10158364
(43) Veröffentlichungstag der Anmeldung: 25.08.2004
(73) Patentinhaber: Bayerische Motoren Werke Aktiengesellschaft, 80809 München (DE)
(72) Erfinder: KRUSE, Klaudia, 80799 München (DE); PARDO, Fernando, Moorpark, CA 93021 (US); SCHWARZ, Christine, 80687 München (DE); WEISS, Verena, 80805 München (DE); MEHN, Reinhard, 85778 Haimhausen (DE); BISCHOFF, Christian, 82205 Gilching (DE); LANCIER, Sven, 80802 München (DE); RINGER, Jürgen, 84072 Au in der Hallertau (DE)
(86) Internationale Anmeldenummer: PCT/EP2001/015204
(87) Internationale Veröffentlichungsnummer: WO 2003/045737

(56) Entgegenhaltungen:
- WO-A-95/31355
- DE-A- 10 026 264
- DE-C- 10 033 019
- DE-C- 19 840 636
- DE-U- 20 009 327
- US-A- 5 267 771
- US-A- 5 902 006

## Beschreibung

Die Erfindung betrifft einen flächigen Abschnitt einer Verkleidung im Innenraum eines Fahrzeugs gemäß des Oberbegriffs des Patentanspruchs 1.

Aus der DE 100 33 019 C1 ist ein flächiger Abschnitt einer Verkleidung im Innenraum eines Kraftfahrzeugs bekannt, wobei am Rand des Abschnitts mindestens ein mechanisch bewegbares Stellelement vorgesehen ist, das den Abschnitt verformen kann.

Aus der DE 200 09 327 U1 und aus der DE 41 12 990 A1 ist ebenfalls ein flächiger Abschnitt einer Verkleidung im Innenraum eines Fahrzeugs bekannt. In diesem Fall befindet sich das mechanisch bewegbare Stellelement unter dem Abschnitt.

Aus der US 7,337,936 B2 und aus der US 4,900,608 A ist ein flexibles, textiles Material bekannt, das auf zumindest einer Seite beschichtet ist.
Aufgabe der Erfindung ist es, eine Verkleidung im Innenraum eines Fahrzeugs zu schaffen, bei der die zu Herstellung benötigten Werkzeugkosten sehr gering sind.

Diese Aufgabe wird durch die Merkmale des Patentanspruchs 1 gelöst.

Dazu besteht ein flächiger Abschnitt einer Verkleidung im Innenraum eines Fahrzeugs aus einem flexiblen Material. Erfindungsgemäß ist unter oder am Rand des Abschnitts mindestens ein mechanisch bewegbares Stellelement vorgesehen, das den Abschnitt verformen kann.

Durch den Ersatz klassischer Verkleidungsteile durch einen flexiblen Abschnitt sind keine teuren Umformwerkzeuge mehr erforderlich. Das Gewicht der Verkleidungsteile reduziert sich, da flexible Materialen, wie Stoffgewebe, ein deutlich geringeres Gewicht haben als entsprechende starre Verkleidungsteile. Auch gelten für die erfindungsgemäßen flexiblen Verkleidungsteile nicht mehr die engen gestalterischen Grenzen wie bei starren Verkleidungsteilen bezüglich Package sowie bezüglich einer formalen Integration weiterer Funktionen. Aufgrund dieser Integration in einem einzigen Verkleidungsteil entstehen keine Fugen bzw. Spalten mehr, die für das optische Erscheinungsbild unerwünscht sind. Ferner ist eine schnelle und preiswerte Reparatur möglich, da nicht alle unterschiedlichen Verkleidungsteile auf Lager gelegt werden müssen, sondern beispielsweise eine einzige Rolle des flexiblen Materials für alle unterschiedlichen Verkleidungsteile ausreicht. Auch der eigentliche Wechsel ist bei einer Verkleidung aus einem flexiblen Material einfach und damit schnell und wenig kostenintensiv möglich.

Das Stellelement ermöglicht eine gezielte Verformung des flexiblen Abschnitts. Beispielsweise ein Bügel, der unmittelbar unter einem solchen Abschnitt angeordnet ist, kann den Abschnitt gezielt verformen, wenn er entsprechend verschwenkt wird. Der Abschnitt spannt sich dann über diesen zumindest teilweise formgebenden Bügel. Das Stellelement ermöglicht so eine hohe Variabilität der Form des Abschnitts, die bei bekannten Verkleidungsteilen nicht möglich ist. Es entstehen so völlig neue Gestaltungsmöglichkeiten von Verkleidungsteilen.

Das flexible Material hat elastische Eigenschaften, das heißt, die Oberfläche des Materials ist vergrößerbar. Typische flexible Materialen mit elastischen Eigenschaften sind unter anderem Stretchstoffe, Latex sowie alle Elastomere. Eine flexible und elastische Verkleidung im Innenraum eines Fahrzeugs ermöglicht noch einmal eine deutlich freiere Formensprache, als eine Verkleidung, die nur flexibel ist. Der elastische Abschnitt der Verkleidung kann bei einem Unfall auch Aufprallenergie absorbieren. Dies ist eine sehr einfache, preiswerte und elegante Möglichkeit, einen zusätzlichen Schutz für die Fahrzeuginsassen zu realisieren. Bei geschickter Auslegung sind keine separaten Bauteile mehr dafür erforderlich.

Der flächige Abschnitt besteht aus einem flexiblen textilen Flächengebilde, das zumindest auf der sichtbaren Seite beschichtet ist, wobei der Abschnitt vorgereckt ist. Das textile Flächengebilde stellt dabei die eigentliche tragende Schicht dar. Sie ist für die Steifigkeit und die Festigkeit verantwortlich.
An einem Rand des Abschnitts ist vorteilhafterweise eine Leiste befestigt, die an einem fahrzeugfesten Bauteil durch eine Clipsverbindung befestigbar ist. Die Leiste kann beispielsweise mit dem Rand des Abschnitts verklebt, verschweißt oder gemäß einer besonders geeigneten Weiterbildung auf den Rand des Abschnitts aufgenäht sein. Dazu ist die Leiste günstigerweise aus Kunststoff. Beispielsweise eine Nähnadel einer Industrienähmaschine kann mühelos eine nicht zu dicke Leiste aus einem Thermoplasten durchdringen. Die Clipsverbindung der Leiste mit dem fahrzeugfesten Bauteil kann beispielsweise so ausschauen, dass das fahrzeugfeste Bauteil eine Art Stange darstellt, auf die die Leiste mit einem Clipsabschnitt, der einen Kanal mit einem C-förmigen Querschnitt aufweist, aufgeclipst werden kann. Dieser Clipsabschnitt umschließt im aufgeclipsten Abschnitt dann die Stange zumindest teilweise formschlüssig.

Auf eine solche Clipsverbindung können, insbesondere bei Verwendung eines vorgespannten Abschnitts mit elastischen Eigenschaften, hohe Kräfte einwirken. Um diese Kräfte, die auf die Clipsverbindung einwirken, zu reduzieren, kann der Abschnitt nahe bei der Clipsverbindung in Kraftrichtung über ein fahrzeugfestes Umlenkteil oder über ein Stellelement so gespannt sein, dass an den Kontaktstellen zwischen Umlenkteil bzw. Stellelement und dem Abschnitt Reibungskräfte auftreten. Die auf die Clipsverbindung wirkenden Kräfte reduzieren sich dadurch annähernd um die auftretenden Reibungskräfte.

Günstigerweise ist mindestens ein Stellelement translatorisch und / oder rotatorisch bewegbar. Beispielsweise pneumatische, elektrische, piezo-elektrische oder hydraulische Stellelemente gibt es standardmäßig für translatorische und rotatorische Bewegungen. Durch die Kombination mehrerer dieser Standard-Stellelemente ist jede Bewegungskinematik darstellbar, ohne eine komplexe Sonderanfertigung eines Stellelementes zu benötigen.

Auch eine Kopplung der Bewegung eines Stellelementes mit der Fahrzeuggeschwindigkeit ist möglich. Beispielsweise kann die Verkleidung des Armaturenbretts bei hohen Geschwindigkeiten durch das Stellelement so verformt werden, dass das Armaturenbrett eine besonders sportliche Anmutung erhält.

In einer weiteren vorteilhaften Ausgestaltung kann das Stellelement in Abhängigkeit eines detektierten Aufpralls bewegbar sein. Beispielsweise kann die Verkleidung bei einem Aufprall durch das Stellelement so verlagert werden, dass zwischen der Verkleidung und darunter liegenden Bauteilen ein gewisser Abstand entsteht. Dieser Abstand steht nun als Verformungsweg für die Verkleidung zur Verfügung, um auf diese Verkleidungen auftreffende Gegenstände oder Körperteile nachgiebig abzufangen, sodass zumindest größere Schäden an den Gegenständen oder Körperteilen verhinderbar sind.

Im Folgenden werden nun einige Anwendungen des erfindungsgemäßen flächigen Abschnitts einer Verkleidung im Innenraum exemplarisch betrachtet:

Idealerweise ist mindestens ein Stellelement ein schwenkbar angebrachtes Anzeigeinstrument, das in bzw. an einem Armaturenbrett angebracht ist, und von einem flexiblen Abschnitt umgeben ist. Ein derartiges Anzeigeinstrument kann beispielsweise ein Tachometer, ein Drehzahlmesser oder ein Anzeigedisplay eines Navigationssystems sein. Das Anzeigeinstrument kann beispielsweise um eine vertikale Achse schwenkbar sein. So kann das Anzeigeinstrument je nach Bedarf etwas mehr nach links oder nach rechts verschwenkt werden, sodass es vom Fahrerplatz oder vom Beifahrerplatz besser ablesbar ist. Da das Anzeigeinstrument mit einem flexiblen Abschnitt umgeben ist, fügt es sich in jeder Stellung harmonisch in bzw. an das Armaturenbrett. Eine mittige Anordnung solcher Anzeigeinstrumente ermöglicht die Verwendung eines einzigen Armaturenbretts sowohl für Links- als auch für Rechtslenker.

Gemäß einer Weiterbildung sind bei mindestens einem solchen Anzeigeinstrument bestimmte Positionen in einer Steuereinheit speicherbar und wieder abrufbar. So können beispielsweise auf einen bestimmten Fahrer abgestimmte Positionen jederzeit schnell reproduziert werden, ohne dass der Fahrer lange herumprobieren muss, um seine Positionen wieder zu finden.

In einer sehr schönen und trotzdem einfachen Ausführung kann der Abschnitt durch zumindest ein Stellelement so verformbar sein, dass je nach Position des Stellelements der Abschnitt zumindest ein Anzeigeinstrument unterschiedlich weit und / oder unterschiedliche Teilbereiche des Anzeigeinstruments verdeckt. Abhängig von der Form der Abdeckung des Anzeigeinstruments kann das Anzeigeinstrument ähnlich wie ein Auge dabei ganz unterschiedliche Mimiken annehmen. Wenn der Abschnitt beispielsweise das Anzeigeinstrument vor allem von unten abdeckt, bekommt das Anzeigeinstrument ein eher freundliches Antlitz.

In günstigen Weiterbildung dazu kommen zumindest zwei Abschnitte zum Einsatz, die zumindest ein Anzeigeinstrument unterschiedlich weit und / oder unterschiedliche Teilbereiche des Anzeigeinstruments verdecken. Mit zwei oder mehr Abschnitten lässt sich der "Augenausdruck" des Anzeigeinstruments mit noch viel mehr Nuancen modulieren.

In einer anderen Anwendung dient der erfindungsgemäße Abschnitt als Abdeckung für einen Spalt. Derartige Abdeckungen eines Spaltes dienen in einem Fahrzeug zum Abdecken von optisch weniger schönen Technikbereichen und zur Vermeidung der Verschmutzung solcher Bereiche. Der Spalt kann sich beispielsweise zwischen einer Sitzlehne eines Fahrzeugsitzes und einer Seitenverkleidung einer seitlich angrenzenden Säule der Fahrzeugkarosserie befinden. Der flächige Abschnitt ist dabei fest mit der Seitenverkleidung und mit der Sitzlehne verbunden, die als Stellelement verlagerbar ist. Der Spalt kann sich aber auch zwischen einem Sitzkissen und einer Bodenverkleidung eines im Innenraum seitlich angrenzenden Seitenschwellers der Fahrzeugkarosserie befinden. Der flächige Abschnitt ist dann fest mit der Bodenverkleidung und mit dem Sitzkissen verbunden, das als Stellelement verlagerbar ist.

Vorteilhafterweise kann unter dem erfindungsgemäßen Abschnitt zumindest eine Beleuchtungseinrichtung angebracht sein, die zumindest teilweise durch den Abschnitt hindurch leuchtet. Der Leuchtkörper kann dazu der Einfachheit halber direkt an dem Abschnitt befestigt sein. So können Leuchten, wie Warnanzeigen, etc. unter dem Abschnitt angebracht sein. Wenn die Leuchten nicht in Betrieb sind, sind sie optisch unter der Abdeckung nicht sichtbar. Auch die Fugenproblematik stellt sich hier nicht, da die Leuchten sich unter dem Abschnitt befinden. Alternativ können die Leuchten aber auch dazu benutzt werden, den Abschnitt großflächig von hinten auszuleuchten. So kann beispielsweise je nach Laune des Fahrers auch die Farbe und Helligkeit des Abschnitts verändert werden. Das Ambiente im Innenraum kann so erheblich variiert werden.

Wenn ganze Abschnitte der Verkleidung im Innenraum eines Fahrzeugs aus einem elastischen Material gebildet werden sollen, muss dieses Material eine hohe Reißfestigkeit aufweisen. Desweiteren muss das Material zur Vermeidung unerwünschter Geräusche vorgespannt angebracht werden, wobei es diese Vorspannung nicht verlieren soll.

Textile Flächengebilde können Gewebe, Gewirke, Gestricke oder Vliese sein. Ein Gewebe besteht aus zwei sich rechtwinklig kreuzenden Fadensystemen, von denen die Kette (Zettel) senkrecht und der Schuss (Einschlag) waagrecht verlaufen. Die Qualität eines Gewebes hängt außer von der Fadenkreuzung ab von Material, Dicke und Art des Garns, der Appretur, Farbe, Haltbarkeit, Geschmeidigkeit, Steifheit, Festigkeit und dem Griff. Gewebe sind für strukturelle Anwendungen in der Regel nur unwesentlich dehnbar in Längs- und Querrichtung und damit für das erfindungsgemäße elastische Material weniger geeignet. Dehnbare Gewebe, die die geforderte reversible Dehnbarkeit erfüllen, können jedoch auch auf der Basis von hochdehnbaren, zum Beispiel texturfesten Garnen realisiert werden. Ein Vlies bzw. eine Matte besteht aus wirr gelegten Endlos- oder Stapelfäden. Da die Fäden dabei willkürlich zum Liegen kommen, kann ein solches textiles Gebilde unerwünschterweise in seinen Eigenschaften stark schwanken. Außerdem weist ein Vlies kein ausgeprägtes Rücksprungverhalten auf. Gewirke und Gestricke sind aus Maschen aufgebaut und werden auf Wirk- oder Strickmaschinen hergestellt. Ein Gewirke weist im Gegensatz zum Gestricke zwischen den Maschen noch zusätzliche Querverbindungen auf. Gestricke und Gewirke sind in Längs- und in Querrichtung gut dehnbar. Gewirke weisen allerdings in Längs- und Querrichtung leicht unterschiedliche Eigenschaften auf. Idealerweise ist das textile Flächengebilde daher ein Gestricke oder ein Gewirke. Bei einem Gestricke kann zusätzlich ein unidirektionaler Eintrag zur Verstärkung erfolgen, das heißt es können zusätzliche Fasern bzw. Fäden in einer oder mehreren Richtungen in das textile Gebilde eingebracht werden.

Die Elastizität des Materials wird aber nicht nur durch die textile Struktur bestimmt, sondern auch durch das Material der Fasern bzw. Fäden, aus der das textile Gebilde besteht. Um trotz der elastischen Dehnbarkeit der textilen Struktur eine sehr hohe Reißfestigkeit zu erhalten, soll die Elastizität bevorzugt ausschließlich aus der Struktur des textilen Gebildes und nicht vom Material der Fäden bzw. Fasern des textilen Gebildes kommen. Daher kommen nur relativ feste Fasern in Betracht wie beispielsweise aus Polyamid, Polyethylenteraphtalat, Polyethylen, Aramidfasern oder Stahlfasern. Fasern aus Polyamid weisen eine niedrige Lichtbeständigkeit auf und sind leicht hydrophob und teuer. Vorteilhafterweise sind die Fasern aus Polyethylenteraphtalat (PES bzw. PET). PES ist hochfest, hat eine geringe Kriechneigung und der Schrumpf ist einstellbar. Es ist gut anfärbbar und es gibt ein breites Angebotsspektrum. Die Verfügbarkeit ist hoch und die gewünschten Eigenschaften lassen sich durch Additive gut einstellen. Polyethylen dagegen ist zwar extrem fest und hochzäh, aber auch sehr teuer, hydrophob und hat einen niedrigen Schmelzpunkt sowie eine ausgeprägte Kriechneigung. Als Weiterentwicklung von PES ist PEN natürlich ebenfalls sehr geeignet. PEN hat noch etwas höhere mechanische Eigenschaften und eine geringere Kriechneigung. Aramidfasern sind extrem zäh, fest und temperaturbeständig, aber teuer, hydrophob und weisen schlechte Hafteigenschaften auf. Stahlfasern sind hochfest und zäh, sowie korrosionsbeständig. Sie sind allerdings teuer und problematisch in der Verarbeitung. Aramidfasern und Stahlfasern sind daher als alleiniges Material ungeeignet, bieten sich aber als Beimischung an, um den Schutz gegen Vandalismus des textilen Gebildes zu erhöhen.

In dem textilen Gebilde können ferner weitere Fasern eingearbeitet sein, die als Sensoren und / oder Aktuatoren dienen. So sind beispielsweise in der nicht vorveröffentlichten Patentanmeldung DE 101 10 329.8 Textilien beschrieben, in die lichtleitende Fasern eingebracht sind, die durch mindestens eine Lichtquelle beleuchtbar sind. Aus der ebenfalls nicht vorveröffentlichten Patentanmeldung DE 100 29 237.2 ist eine Sitzheizung bekannt, die sich lokal nur an den Stellen erwärmt, an denen auch tatsächlich ein Passagier den Sitz belastet. Dazu können entsprechende Drähte, die unter Druck gegenseitig einen Kontakt erzeugen in den textilen Sitzbezug miteingewebt sein.

Die Beschichtung kann wasserdicht sein und den erforderlichen Schutz vor UV-Licht bilden. Auch für Verschleiß- und Abriebbeständigkeit sowie für die Optik ist die Beschichtung zuständig. Zur Optik zählt dabei nicht nur das eigentliche Erscheinungsbild sondern auch, in wie weit Schmutz von der Beschichtung abgewiesen oder zumindest wieder leicht entfernt werden kann. Erst in der Kombination aus dem textilen Flächengebilde mit der Beschichtung können alle Anforderungen bezüglich Reißfestigkeit, Witterungsbeständigkeit, Verschleißfestigkeit und reversible elastische Vorspannbarkeit erfüllt werden.

Die Beschichtung besteht günstigerweise aus einer Klebstoffschicht, einer aromatischen Zwischenschicht und einer aliphatischen Abschlussschicht. Die Klebstoffschicht garantiert eine optimale Haftung der Beschichtung auf dem textilen Gewebe. Die aromatische Zwischenschicht stellt die Wasserdichtigkeit und UV-Beständigkeit sicher und die aliphatische Abschlussschicht erzeugt das gewünschte optische äußere Erscheinungsbild. Da das erfindungsgemäße textile Gebilde bei Fahrzeugen insbesondere Außenhautteile aus Blech substituieren soll, ist vor allem ein Erscheinungsbild gefragt, das einer lackierten Blechoberfläche ähnlich sieht. Hierzu werden Oberflächen mit unterschiedlichen Glanzgraden (matt bis hochglänzend) und mit unterschiedlichen Rauigkeiten (glatt oder strukturiert) eingesetzt.

Weiter vorteilhafte Ausgestaltungen sind Gegenstand von Unteransprüchen.

In der Zeichnung sind mehrere Ausführungsbeispiele der Erfindung dargestellt, die im Folgenden näher beschrieben werden. Es zeigen in schematischer Darstellungsweise:
- **Fig.** 1: Einen Schnitt durch ein Armaturenbrett eines Kraftfahrzeugs in der XY-Ebene,
- **Fig.** 2: einen Schnitt durch das Armaturenbrett von **Fig.** 1, wobei die Instrumente sich in einer anderen Stellung befinden,
- **Fig.** 3: eine Befestigung eines Randes eines erfindungsgemäßen Abschnitts an einem karosseriefesten Bauteil durch eine Clipsverbindung,
- **Fig.** 4: eine Abdeckung eines Anzeigeinstruments mit einer freundlichen Mimik,
- **Fig.** 5: die Abdeckung eines Anzeigeinstruments von **Fig.** 4 mit einer unfreundlichen Mimik,
- **Fig.** 6: eine Spaltabdeckung zwischen einer Sitzlehne eines Fondsitzes und einer angrenzenden C-Säule,
- **Fig.** 7: eine Leuchte, die hinter einem erfindungsgemäßen Abschnitt angebracht ist,
- **Fig.** 8: einen Schnitt durch ein erfindungsgemäßes Material,
- **Fig.** 9: eine Prinzipdarstellung eines Gewirkes, wie es im Material von **Fig.** 8 zum Einsatz kommt und
- **Fig.** 10: ein Kraft-Dehnungs-Diagramm des Materials von **Fig.** 8.

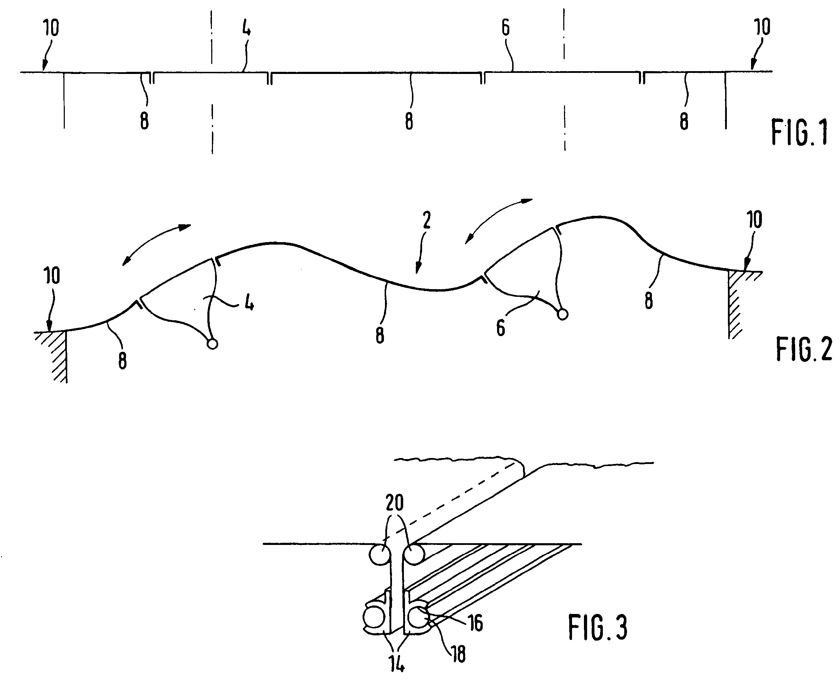

In **Fig.** 1 ist skizzenhaft ein horizontaler Schnitt durch ein Armaturenbrett 2 in einem Kraftfahrzeug dargestellt. In das Armaturenbrett 2 ist ein Tachometer 4 und ein Drehzahlmesser 6 eingelassen. Beide Anzeigeinstrumente 4 und 6 sind um eine Achse senkrecht zur Y-Richtung schwenkbar und beide Anzeigeinstrumente 4 und 6 sind von einem elastischen vorgespannten Abschnitt 8 umgeben. Der elastische Abschnitt 8 bildet die Verkleidung unmittelbar neben den Instrumenten 4 und 6. Beabstandet zu den Instrumenten 4 und 6 ist der elastische Abschnitt 8 mit der restlichen starren Instrumententafel 10 verbunden. Der Abschnitt 8 erzeugt in jeder Stellung der Anzeigeinstrumente 4 und 6 einen formschönen, stufenlosen Übergang zur restlichen starren Instrumententafel 10. Zur Verdeutlichung ist in **Fig.** 2 noch einmal dasselbe Armaturenbrett 2 wie in **Fig.** 1 gezeigt, allerdings befinden sich der Tachometer 4 und der Drehzahlmesser 6 in einer anderen Stellung.

Das elastische Material muss immer eine gewisse Vorspannung behalten, damit es nicht unerwünschterweise Falten wirft. Angesichts der sehr unterschiedlichen Temperaturbedingungen ist dafür eine relativ hohe Vorspannung erforderlich. Dennoch soll das Material am Fahrzeug auf eine Art und Weise befestigt sein, dass ein schneller Wechsel möglich ist. Idealerweise soll das Material, wenn es alt oder beschädigt ist, von jedem Fahrzeugnutzer selber gewechselt werden können. Dies würde es auch ermöglichen, die Farbe der Verkleidung jederzeit verändern zu können, indem einfach ein andersfarbiges Material verwendet wird. Eine dafür geeignete Befestigung des Materials ist in **Fig.** 3 dargestellt.

Auf den Rand eines flexiblen Materials 12 ist eine Leiste 14 aus einem thermoplastischen Kunststoff aufgenäht. Am äußeren Rand weist die Leiste 14 einen C-förmigen Kanal 16 auf, mit dem sie formschlüssig auf eine Stange 18 aufgeclipst werden kann. Diese Stange 18 kann entweder direkt mit der Karosserie verbunden sein, oder über ein Stellelement relativ zur Karosserie verlagerbar sein. Diese Befestigungen sind günstigerweise so angeordnet, dass sie nicht direkt sichtbar sind. Dazu kann beispielsweise das Material 12 zuvor über einen Spline 20 von der sichtbaren Seite nach innen umgelenkt werden, und dort erst an der Stange 18 befestigt werden. Splines sind einfache Stangen, die so gebogen sind, dass sie das Material 12 in der gewünschten Form aufspannen. Diese Splines können jede beliebige Form und Querschnittsform aufweisen. Die notwendige Haltekraft der Clipsverbindung reduziert sich bei dieser Anordnung zudem um die Reibungskraft zwischen dem Material 12 und dem Spline 20.

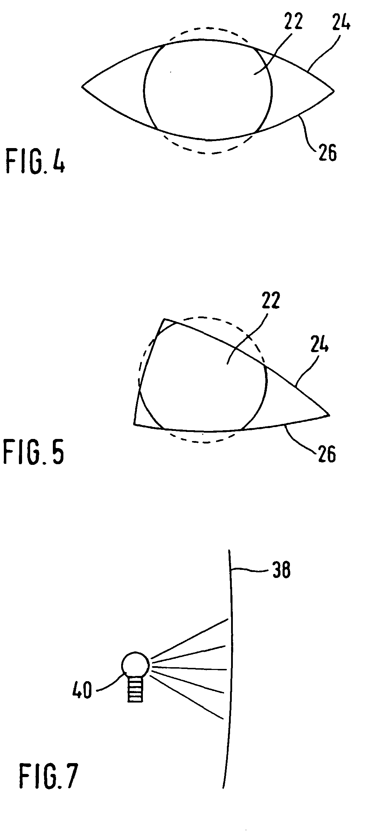

Eine sehr wirkungsvolle andere Anwendung ist ebenfalls bei Anzeigeinstrumenten möglich. In **Fig.** 4 ist ein Anzeigeinstrument 22 gezeigt, das jeweils von oben und von unten teilweise von einem Abschnitt 24 bzw. 26 aus einem flexiblen Material verdeckt ist. Wenn nun das Anzeigeinstrument 22 quasi als Auge betrachtet wird, entsprechen die Abschnitte 24 und 26 den Augenlidern. Die beiden Abschnitte 24 und 26 decken in **Fig.** 4 das Anzeigeinstrument 22 teilweise so ab, dass es erscheint, als ob das "Auge" lacht. Durch Stellelemente können die Abschnitte 24 und 26 aber auch so verlagert werden, dass sie das Anzeigeinstrument 22 so verdecken, dass es ein unfreundliches Antlitz wie in **Fig.** 5 bekommt. Diese Veränderung der Mimik kann beispielsweise in Abhängigkeit der Stimmung des Fahrzeugnutzers gesteuert werden.

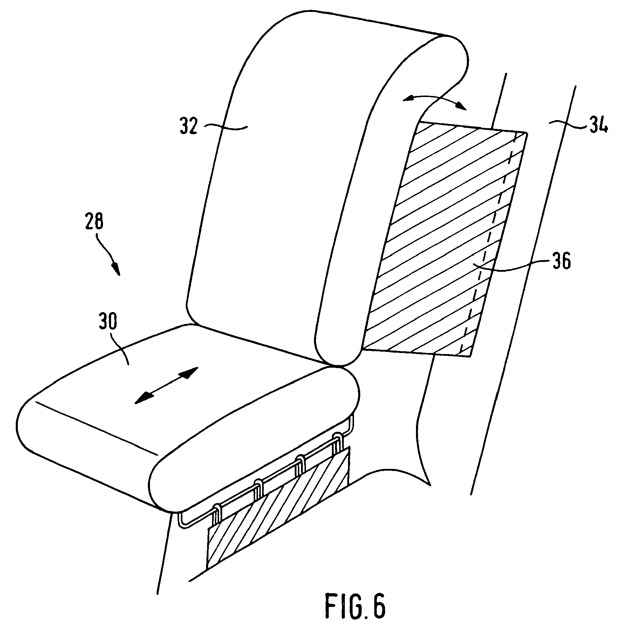

**Fig.** 6 zeigt einen verstellbaren Rücksitz 28 in einem Personenkraftwagen bestehend aus einem Sitzkissen 30 und einer Sitzlehne 32. Das Sitzkissen 30 ist in Fahrtrichtung verfahrbar und die Sitzlehne 32 ist in der Neigung einstellbar. Seitlich neben der Sitzlehne 32 befindet sich durch einen Zwischenraum getrennt in diesem Ausführungsbeispiel eine C-Säule 34 des Personenkraftwagens. Der Zwischenraum zwischen Sitzlehne 32 und C-Säule 34 ist mit einem elastischen vorgespannten Abschnitt 36 größtenteils geschlossen. Der Abschnitt ist dazu fest an der C-Säule 34 und der Sitzlehne 32 angebracht. Aufgrund der Elastizität und der Vorspannung kann der Abschnitt 36 relative Bewegungen der beweglichen Sitzlehne 32 zur C-Säule 34 ausgleichen, ohne dass der Abschnitt 36 Falten wirft.

Eine Verkleidung im Innenraum eines Fahrzeugs, die von einem flexiblen gegebenenfalls auch elastischen Material gebildet wird, bietet noch weitere grundsätzliche Möglichkeiten zur Individualisierung des Fahrzeugs. So kann wie in **Fig.** 7 gezeigt, unter dem Material 38 eine Leuchte 40 angeordnet sein. Diese Leuchte 40 scheint zumindest teilweise durch das Material 38 hindurch, wenn sie eingeschaltet ist. So können beispielsweise Warnleuchten realisiert werden, die nur sichtbar sind, wenn sie eingeschaltet sind. Es entstehen keine Spalte zwischen den Leuchten 40 und den angrenzenden Fahrzeugteilen.

Denkbar ist aber auch eine sogenannte Ambientebeleuchtung. Die Leuchte 40 oder Leuchten scheinen nicht punktuell durch das Material 38 durch, sondern beleuchten es großflächig von hinten. So kann der Innenraum beispielsweise im Dunkeln eine schwach leuchtende Verkleidung in der Farbe der jeweiligen Leuchte 40 aufweisen, bei der außerdem die Helligkeit regelbar ist.

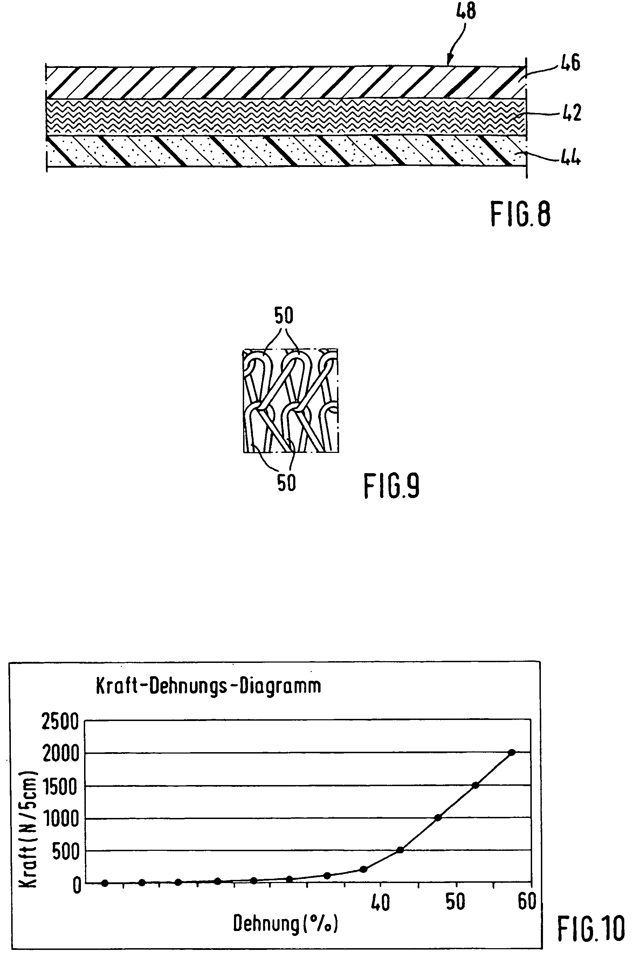

Alle diese Anwendungen erfordern ein geeignetes elastisches Material. In **Fig.** 8 ist ein solches elastisches Material dargestellt, das aus einer mittleren Schicht 42 besteht, die aus einem Gewirke aus Fasern aus PES besteht. Die mittlere Schicht 42 weist eine obere und eine untere Beschichtung 46 und 44 auf. Die obere Beschichtung 46 erzeugt die gewünschte Optik. Die obere Beschichtung 46 ist mit einer Klebstoffschicht mit der mittleren Schicht 42 verbunden. Die eigentliche obere Beschichtung 46 besteht aus einem Polyurethanschaum, der den erforderlichen UV-Schutz und den sonstigen Medienschutz sicherstellt. Auf der Oberseite 48 der oberen Beschichtung 46 ist eine dünne aliphatische Abschlussschicht aufgebracht, die die gewünschte Verschleißfestigkeit und Alterungsbeständigkeit gewährleistet. Die untere Beschichtung 44 ist genauso wie die obere Beschichtung 46 aufgebaut.

Wie in **Fig.** 9 gut zu sehen ist, besteht die mittlere Schicht 42 aus einem Gewirke mit gleichmäßig angeordneten Maschen 50. Derartige Gewirke lassen sich ohne großen Aufwand mit kurzen Rüstzeiten darstellen.

Dieses elastische Material verhält sich bei Belastung gemäß dem in **Fig.** 10 gezeigten Kraft-Dehnungs-Diagramm. Darin ist gut zu sehen, dass das Material um fast 30 % in der textilen Struktur gedehnt werden kann, bevor die Fasern sich längen. Um dabei ein Rückstellverhalten möglichst ohne Hysterese zu erreichen, wurde das Material vorgereckt, sodass sich das Material möglichst bereits vor dem Einsatz gesetzt hat. Mit einem solchen Material lassen sich bei Dicken von ca. 1,7 mm Festigkeiten von bis zu 2000 N / 5 cm erreichen.

### Bezugszeichenliste

- 2: Armaturenbrett
- 4: Tachometer
- 6: Drehzahlmesser
- 8: Elastischer Abschnitt
- 10: Restliche starre Instrumententafel
- 12: Flexibles Material
- 14: Leiste
- 16: C-förmiger Kanal
- 18: Stange
- 20: Spline
- 22: Anzeigeinstrument
- 24: Abschnitt
- 26: Abschnitt
- 28: Rücksitz
- 30: Sitzkissen
- 32: Sitzlehne
- 34: C-Säule
- 36: Elastische Abschnitt
- 38: Elastisches Material
- 40: Leuchte
- 42: Mittlere Schicht
- 44: Untere Beschichtung
- 46: Obere Beschichtung
- 48: Oberseite
- 50: Maschen

## Patentansprüche

1. Flächiger Abschnitt einer Verkleidung im Innenraum eines Fahrzeugs, der aus einem flexiblen textilen Flächengebilde mit elastischen Eigenschaften besteht, wobei unter oder am Rand des Abschnitts (8, 12, 24, 26, 36, 38) mindestens ein mechanisch bewegbares Stellelement (4, 5, 32) vorgesehen ist, das den Abschnitt (8, 12, 24, 26, 36, 38) verformen kann, **dadurch gekennzeichnet, dass** das flexible textile Flächengebilde zumindest auf der sichtbaren Seite beschichtet ist, wobei der Abschnitt (8, 36, 38) vorgereckt ist.

2. Abschnitt einer Verkleidung nach Anspruch 1, **dadurch gekennzeichnet, dass** das flexible Material (8, 24, 26, 38, 38) eine Leiste (14) befestigt ist, die an einem angrenzenden fahrzeugfesten Bauteil (18) durch eine Clipsverbindung (16) befestigbar ist.

3. Abschnitt einer Verkleidung nach Anspruch 2, **dadurch gekennzeichnet dass** die Leiste (14) an dem Rand des Abschnitts (8, 12, 24, 26, 36, 38) aufgenäht ist.

4. Abschnitt einer Verkleidung nach Anspruch 2 oder 3, **dadurch gekennzeichnet dass** die Leiste (14) aus Kunststoff ist.

5. Abschnitt einer Verkleidung nach einem der vorhergehenden Ansprüche, **dadurch gekennzeichnet, dass** mindestens ein Stellelement 84, 5, 32) translatorisch und/oder rotatorisch bewegbar ist.

6. Abschnitt einer Verkleidung nach einem der vorhergehenden Ansprüche, **dadurch gekennzeichnet, dass** mindestens ein Stellelement (4, 5, 32) durch einen mit Hilfsenergie betätigten Aktuator bewegt wird.

7. Abschnitt einer Verkleidung nach einem der vorhergehenden Ansprüche, **dadurch gekennzeichnet, dass** mindestens ein Stellelement (4, 5, 32) in Abhängigkeit der Fahrzeuggeschwindigkeit bewegbar ist.

8. Abschnitt einer Verkleidung nach einem der vorhergehenden Ansprüche, **dadurch gekennzeichnet, dass** mindestens ein Stellelement (4, 5, 32) in Abhängigkeit eines detektierten Aufpralls bewegbar ist.

9. Abschnitt einer Verkleidung nach einem der vorhergehenden Ansprüche, **dadurch gekennzeichnet, dass** mindestens ein Stellelement (4, 5, 32) ein schwenkbar angebrachtes Anzeigeinstrument (4, 5) ist.

10. Abschnitt einer Verkleidung nach Anspruch 9, **dadurch gekennzeichnet, dass** bestimmte Positionen mindestens eines Anzeigeinstruments (4, 5) in einer Steuereinheit speicherbar und wieder abrufbar sind.

11. Abschnitt einer Verkleidung nach einem der vorhergehenden Ansprüche, **dadurch gekennzeichnet, dass** der Abschnitt (24, 26) durch zumindest ein Stellelement so verformbar ist, dass je nach Position des Stellelements der Abschnitt (24, 26) zumindest ein Anzeigeinstrument (22) unterschiedlich weit und / oder unterschiedliche Teilbereiche des Anzeigeinstruments (22) verdeckt.

12. Abschnitt einer Verkleidung nach Anspruch 11, **dadurch gekennzeichnet, dass** zumindest zwei Abschnitte (24, 26) ein Anzeigeinstrument (22) unterschiedlich weit und/oder unterschiedliche Teilbereiche des Anzeigeinstruments (22) verdecken.

13. Abschnitt einer Verkleidung nach einem der vorhergehenden Ansprüche, **dadurch gekennzeichnet, dass** der Abschnitt (36) zumindest einen Spalt abdeckt.

14. Abschnitt einer Verkleidung nach Anspruch 13, **dadurch gekennzeichnet, dass** sich der Spalt zwischen einer Sitzlehne (32) eines Fahrzeugsitzes (28) und einer Seitenverkleidung einer seitlich angrenzenden Säule (34) der Fahrzeugkarosserie befindet.

15. Abschnitt einer Verkleidung nach Anspruch 13, **dadurch gekennzeichnet, dass** sich der Spalt zwischen einem Sitzkissen eines Fahrzeugsitzes und einer Bodenverkleidung im Innenraum eines seitlich angrenzenden Seitenschwellers der Fahrzeugkarosserie befindet.

16. Abschnitt einer Verkleidung nach einem der vorhergehenden Ansprüche, **dadurch gekennzeichnet, dass** unter dem Abschnitt (38) zumindest eine Beleuchtungseinrichtung (40) angebracht ist, die zumindest teilweise durch den Abschnitt (38) hindurch leuchtet.

17. Abschnitt einer Verkleidung nach Anspruch 16, **dadurch gekennzeichnet, dass** der Leuchtkörper (40) direkt an dem Abschnitt (38) befestigt ist.

18. Abschnitt einer Verkleidung nach einem der vorhergehenden Ansprüche, **dadurch gekennzeichnet, dass** das textile Flächengebilde ein Gewirke oder ein Gestricke ist.

19. Abschnitt einer Verkleidung nach einem der vorhergehenden Ansprüche, **dadurch gekennzeichnet, dass** das textile Flächengebilde aus Fasern aus PES bzw. PEN besteht.

20. Abschnitt einer Verkleidung nach einem der vorhergehenden Ansprüche, **dadurch gekennzeichnet, dass** das textile Flächengebilde das textile Flächengebilde auch Fasern enthält, die als Aktuatoren und/oder Sensoren dienen können.

21. Abschnitt einer Verkleidung nach einem der vorhergehenden Ansprüche, **dadurch gekennzeichnet, dass** die Beschichtung (44, 46) aus einer Klebstoffschicht einer aromatischen Zwischenschicht und einer aliphatischen Abschlussschicht besteht.

22. Abschnitt einer Verkleidung nach einem der vorhergehenden Ansprüche, **dadurch gekennzeichnet, dass** die Beschichtung (46) einen UV-Schutz bietet.

23. Abschnitt einer Verkleidung nach einem der vorhergehenden Ansprüche, **dadurch gekennzeichnet, dass** die Beschichtung (46) wasserdicht ist.

24. Abschnitt einer Verkleidung nach einem der vorhergehenden Ansprüche, **dadurch gekennzeichnet, dass** die Beschichtung (44) magnetisch ist.

25. Abschnitt einer Verkleidung nach einem der vorhergehenden Ansprüche, **dadurch gekennzeichnet, dass** die Beschichtung (46) einer lackierten Blechoberfläche sehr ähnlich sieht.

## Claims

1. A flat panelling portion in the interior of a vehicle, which portion comprises a flexible textile fabric having resilient characteristics, wherein provided under or on the edge of the portion (8, 12, 24, 26, 36, 38) is at least one mechanically movable adjusting element (4, 5, 32) which can deform the portion (8, 12, 24, 26, 36, 38), **characterised in that** the flexible textile fabric is coated at least on the visible side, the portion (8, 36, 38) being pre-stretched.

2. A panelling portion according to claim 1, **characterised in that** the flexible material (8, 24, 26, 36, 38) is fastened to a strip (14) which can be fastened by a clip connection (16) to an adjoining component (18) which is fixed to the vehicle.

3. A panelling portion according to claim 2, **characterised in that** the strip (14) is sewn onto the edge of the portion (8, 12, 24, 26, 36, 38).

4. A panelling portion according to claim 2 or claim 3, **characterised in that** the strip (14) comprises plastics material.

5. A panelling portion according to any one of the preceding claims, **characterised in that** at least one adjusting element (4, 5, 32) is movable in a translatory and/or rotatory manner.

6. A panelling portion according to any one of the preceding claims, **characterised in that** at least one adjusting element (4, 5, 32) is moved by an actuator operated by auxiliary energy.

7. A panelling portion according to any one of the preceding claims, **characterised in that** at least one adjusting element (4, 5, 32) is movable subject to the speed of the vehicle.

8. A panelling portion according to any one of the preceding claims, **characterised in that** at least one adjusting element (4, 5, 32) is movable subject to a detected impact.

9. A panelling portion according to any one of the preceding claims, **characterised in that** at least one adjusting element (4, 5, 32) is a swivelably fitted display instrument (4, 5).

10. A panelling portion according to claim 9, **characterised in that** particular positions of at least one display instrument (4, 5) can be stored and retrieved again in a control unit.

11. A panelling portion according to any one of the preceding claims, **characterised in that** the portion (24, 26) can be deformed by at least one adjusting element so that, depending on the position of the adjusting element, the portion (24, 26) covers at least one display instrument (22) to different extents and/or covers different partial areas of the display instrument (22).

12. A panelling portion according to claim 11, **characterised in that** at least two portions (24, 26) cover a display instrument (22) to different extents and/or cover different partial areas of the display instrument (22).

13. A panelling portion according to any one of the preceding claims, **characterised in that** the portion (36) covers at least one gap.

14. A panelling portion according to claim 13, **characterised in that** the gap is located between a backrest (32) of a vehicle seat (28) and a side panelling of a laterally adjoining column (34) of the vehicle body.

15. A panelling portion according to claim 13, **characterised in that** the gap is located between a cushion of a vehicle seat and a floor panelling in the interior of a laterally adjoining side sill of the vehicle body.

16. A panelling portion according to any one of the preceding claims, **characterised in that** fitted under the portion (38) is at least one illumination device (40) which shines at least to some extent through the portion (38).

17. A panelling portion according to claim 16, **characterised in that** the illuminant (40) is fastened directly to the portion (38).

18. A panelling portion according to any one of the preceding claims, **characterised in that** the textile fabric is an interlaced fabric or a knitted fabric.

19. A panelling portion according to any one of the preceding claims, **characterised in that** the textile fabric comprises fibres of PES or PEN.

20. A panelling portion according to any one of the preceding claims, **characterised in that** the textile fabric also contains fibres which can be used as actuators and/or as sensors.

21. A panelling portion according to any one of the preceding claims, **characterised in that** the coating (44,46) comprises an adhesive layer of an aromatic intermediate layer and of an aliphatic cover layer.

22. A panelling portion according to any one of the preceding claims, **characterised in that** the coating (46) provides UV protection.

23. A panelling portion according to any one of the preceding claims, **characterised in that** the coating (46) is watertight.

24. A panelling portion according to any one of the preceding claims, **characterised in that** the coating (44) is magnetic.

25. A panelling portion according to any one of the preceding claims, **characterised in that** the coating (46) closely resembles a painted sheet metal surface.

## Revendications

1. Segment plan d'un habillage de l'habitacle d'un véhicule, qui est constitué par un élément de surface textile flexible ayant des propriétés élastiques, au-dessous ou au bord du segment (8, 12, 24, 26, 36, 38) étant prévu au moins un élément de réglage mécanique mobile (4, 5, 32) pouvant déformer le segment (8, 12, 24, 26, 36, 38),
**caractérisé en ce que**
l'élément de surface textile flexible est revêtu au moins sur sa face visible, le segment (8, 36, 38) étant pré-étiré.

2. Segment d'habillage conforme à la revendication 1,
**caractérisé en ce que**
le matériau flexible (8, 24, 26, 36, 38) est fixé à une baguette (14) pouvant être fixée à un élément (18) solidaire du véhicule voisin par une liaison par encliquetage (16).

3. Segment d'habillage conforme à la revendication 2,
**caractérisé en ce que**
la baguette (14) est cousue au bord du segment (8, 12, 24, 26, 36, 38).

4. Segment d'habillage conforme à la revendication 2 ou 3,
**caractérisé en ce que**
la baguette (14) est en un matériau synthétique.

5. Segment d'habillage conforme à l'une des revendications précédentes,
**caractérisé en ce qu'**
au moins un élément de réglage (4, 5, 32) peut être déplacé par translation et/ou par rotation.

6. Segment d'habillage conforme à l'une des revendications précédentes,
**caractérisé en ce qu'**
au moins un élément de réglage (4, 5, 32) est déplacé par un actionneur actionné par une énergie auxiliaire.

7. Segment d'habillage conforme à l'une des revendications précédentes,
**caractérisé en ce qu'**
au moins un élément de réglage (4, 5, 32) peut être déplacé en fonction de la vitesse du véhicule.

8. Segment d'habillage conforme à l'une des revendications précédentes,
**caractérisé en ce qu'**
au moins un élément de réglage (4, 5, 32) peut être déplacé en fonction de la détection d'un choc ou d'un impact.

9. Segment d'habillage conforme à l'une des revendications précédentes,
**caractérisé en ce qu'**
au moins un élément de réglage (4, 5, 32) est un instrument indicateur (4, 5) monté pivotant.

10. Segment d'habillage conforme à la revendication 9,
**caractérisé en ce que**
des positions définies d'au moins un instrument indicateur (4, 5) peuvent être enregistrées dans une unité de commande et être à nouveau consultées.

11. Segment d'habillage conforme à l'une des revendications précédentes,
**caractérisé en ce que**
le segment (24, 26) peut être déformé par au moins un élément de réglage de sorte que selon la position de l'élément de réglage, le segment (24, 26) recouvre au moins un instrument indicateur (22) différemment largement et/ou différentes zones partielles de cet instrument indicateur (22).

12. Segment d'habillage conforme à la revendication 11,
**caractérisé en ce qu'**
au moins deux segments (24, 26) recouvrent un instrument indicateur (22) différemment largement et/ou différentes zones partielles de cet instrument indicateur (22).

13. Segment d'habillage conforme à l'une des revendications précédentes,
**caractérisé en ce que**
le segment (36) recouvre au moins un intervalle.

14. Segment d'habillage conforme à la revendication 13,
**caractérisé en ce que**
l'intervalle est situé entre un dossier (32) d'un siège de véhicule (28) et un habillage latéral d'une colonne (34) latéralement voisine de la carrosserie du véhicule.

15. Segment d'habillage conforme à la revendication 13,
**caractérisé en ce que**
l'intervalle est situé entre un coussin d'assise d'un siège de véhicule et un habillage de plancher dans le volume interne d'un bas de caisse latéralement voisin de la carrosserie du véhicule.

16. Segment d'habillage conforme à l'une des revendications précédentes,
**caractérisé en ce qu'**
au dessous du segment (38) est monté au moins un dispositif d'éclairage (40) qui éclaire au moins partiellement au travers du segment (38).

17. Segment d'habillage conforme à la revendication 16,
**caractérisé en ce que**
le corps d'éclairage (40) est fixé directement sur le segment (38).

18. Segment d'habillage conforme à l'une des revendications précédentes,
**caractérisé en ce que**
l'élément plan textile est un tissu ou un tricot.

19. Segment d'habillage conforme à l'une des revendications précédentes,
**caractérisé en ce que**
l'élément de surface textile est constitué de fibres de PES ou PEN.

20. Segment d'habillage conforme à l'une des revendications précédentes,
**caractérisé en ce que**
l'élément de surface textile renferme également des fibres qui peuvent servir d'actionneurs et/ou de détecteurs.

21. Segment d'habillage conforme à l'une des revendications précédentes,
**caractérisé en ce que**
le revêtement (44, 46) est constitué par une couche adhésive, une couche intermédiaire aromatique et une couche de liaison aliphatique.

22. Segment d'habillage conforme à l'une des revendications précédentes,
**caractérisé en ce que**
le revêtement (46) assure une protection anti-UV.

23. Segment d'habillage conforme à l'une des revendications précédentes,
**caractérisé en ce que**
le revêtement (46) est imperméable à l'eau.

24. Segment d'habillage conforme à l'une des revendications précédentes,
**caractérisé en ce que**
le revêtement (44) est magnétique.

25. Segment d'habillage conforme à l'une des revendications précédentes,
**caractérisé en ce que**
le revêtement (46) a un aspect très similaire à celui d'une surface de tôle vernie.
